Europäisches Patentamt

European Patent Office

Office européen des brevets

(11) Numéro de publication: **0 274 303 A1**

(12) # DEMANDE DE BREVET EUROPEEN

(21) Numéro de dépôt: 87402745.1

(22) Date de dépôt: 03.12.87

(51) Int. Cl.⁴: **H02M 7/538 , H05B 6/06**

(30) Priorité: **05.12.86 FR 8617099**

(43) Date de publication de la demande:
**13.07.88 Bulletin 88/28**

(84) Etats contractants désignés:
**BE CH DE ES GB IT LI NL SE**

(71) Demandeur: **ELECTRICITE DE FRANCE Service National**
**2, rue Louis Murat**
**F-75008 Paris(FR)**

(72) Inventeur: **Nuns, Jacques**
**6, rue du Chateau d'Eau**
**F-77250 Ecuelles(FR)**

(74) Mandataire: **Martin, Jean-Jacques et al**
**Cabinet REGIMBEAU 26, Avenue Kléber**
**F-75116 Paris(FR)**

(54) **Système de régulation d'un générateur onduleur à commutateurs alimentant une charge par induction.**

(57) L'invention concerne un système de régulation d'un générateur onduleur à commutateurs alimentant une charge par induction.

La charge présente l'impédance d'un circuit résonannant série R,L,C et est monté en série avec la sortie de l'onduleur, par l'intermédiaire d'au moins deux interrupteurs, dont les bornes de commutation sont connectées en parallèle avec une diode. Le système comprend une boucle d'asservissement en fréquence de la tension d'alimentation délivrée par l'onduleur à une fréquence voisine de la fréquence propre de la charge variable en fonction de l'état magnétique de la charge, cette boucle constituant boucle rapide. Une deuxième boucle de régulation en fonction du niveau de puissance ou du niveau de tension d'alimentation de l'onduleur est également prévue, cette boucle constituant une boucle dite lente.

Application à la régulation de fours à induction industriels.

FIG_6

EP 0 274 303 A1

## SYSTEME DE REGULATION D'UN GENERATEUR ONDULEUR A COMMUTATEURS ALIMENTANT UNE CHARGE PAR INDUCTION.

L'invention concerne un système de régulation d'un générateur onduleur à transistors alimentant une charge par induction.

Le chauffage par induction consiste à créer un champ magnétique alternatif dans un matériau conducteur, ce champ magnétique induisant des courants de Foucault dans le matériau, dissipant de l'énergie au sein de celui-ci par effet Joule.

Par principe, l'énergie dissipée au sein même du matériau et la puissance transmise par unité de volume peuvent être très importantes. L'énergie est dissipée à la surface de la pièce soumise au phénomène d'induction, l'épaisseur de pénétration de l'énergie dans le matériau constitutif de celle-ci dépendant des caractéristiques magnétiques de ce dernier ainsi que de la fréquence du champ magnétique alternatif.

Dans toutes les applications, la charge, pour le générateur à induction utilisé, peut être assimilée à un circuit R,L,C, série ou parallèle, l'inducteur présentant une impédance selfique et résistive, une adaptation d'impédance étant prévue par transformateurs, les capacités fonctionnant ainsi sous une tension acceptable.

Dans les applications précédentes citées, l'impédance ou charge vue du générateur est constàmment variable, en fonction, notamment, du passage du point de Curie pour les matériaux magnétiques et du transfert ou déplacement des pièces à traiter à l'intérieur de l'inducteur ou four à induction.

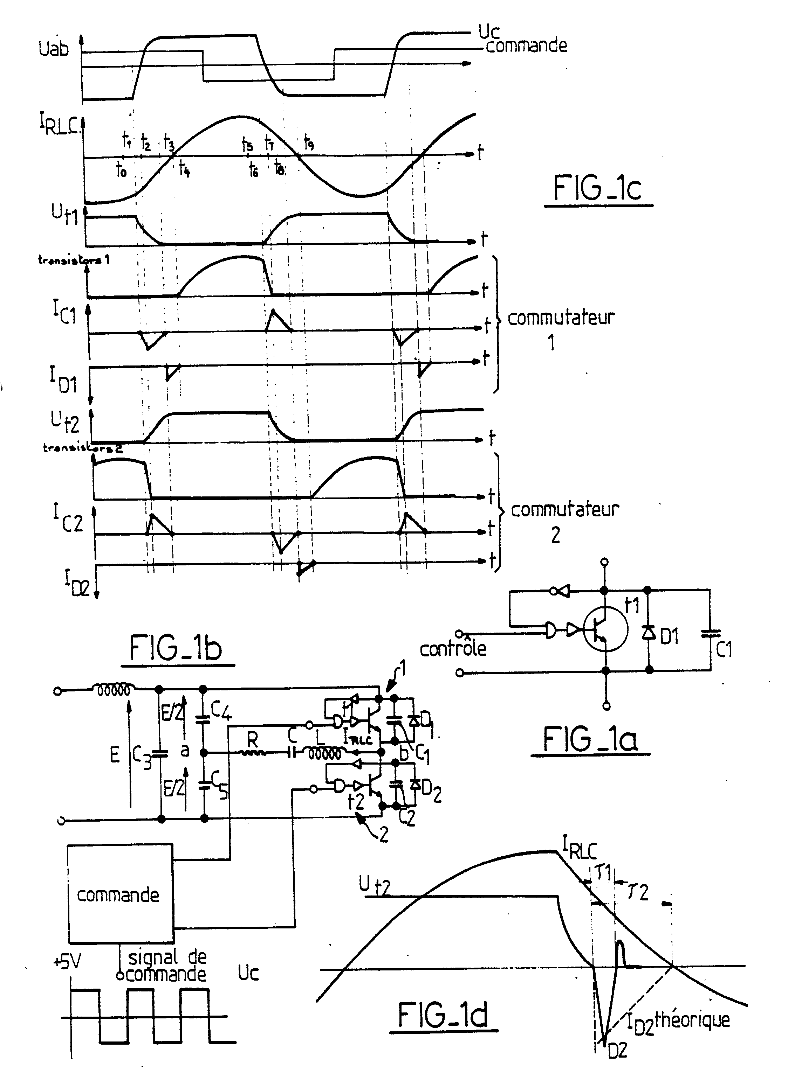

Les générateurs utilisés sont constitués par des convertisseurs alternatif-continu - alternatif et débitent sur le circuit résonant série R,L,C. Ces générateurs correspondent par exemple à un montage en pont ou en demi-pont dans lequel la charge R,L,C est montée en série avec la sortie d'un onduleur, constituant générateur commandé, par l'intermédiaire d'au moins deux interrupteurs commandés à l'ouverture. Les interrupteurs sont constitués par des éléments de commutation, les bornes de commutation de ces derniers étant connectées en parallèle avec une diode et un condensateur. De tels générateurs normalement disponibles dans le commerce et les formes d'onde correspondantes sont représentées en figures 1a à 1d dans le cas, non limitatif, où les commutateurs sont constitués par des thyristors "duals", ce type de composant étant connu de l'état de la technique et plus particulièrement représenté en figure 1a.

La figure 1b représente un onduleur en demi-pont, dans lequel les thyristors "duals" sont utilisés comme commutateurs 1,2.

Dans ce type de générateurs, le fait de travailler avec une source de tension et d'avoir une charge série impose pratiquement à la fréquence de fonctionnement, la fréquence du signal de commande UC, d'être toujours supérieure à la fréquence propre de la charge constituée par le circuit résonant série R,L,C.

La puissance transmise à la charge par le générateur est fonction de l'amplitude de la tension d'alimentation délivrée par le générateur, de la ten sion U appliquée à l'inducteur et de l'intensité IRLC parcourant la charge, ainsi que du déphasage entre ces deux derniers paramètres. Pour une amplitude de la tension d'alimentation donnée, la puissance transmise est maximale quand la fréquence de fonctionnement est égale à la fréquence propre de la charge. Ce cas est un cas limite qui n'est pas satisfait en en raison des conditions de fonctionnement éminemment variables déjà mentionnées.

L'invention a pour but de remédier à l'inconvénient précité par la mise en oeuvre d'un système de régulation d'un générateur onduleur à commutateurs alimentant une charge par induction, dans lequel une transmission de puissance maximale d'énergie à la charge est obtenue en permanence par asservissement en permanence de la fréquence de la tension d'alimentation à une fréquence voisine de la fréquence propre de la charge.

Un autre objet du système de régulation onduleur à commutateurs objet de l'invention est la mise en oeuvre d'une régulation de niveau de puissance transmise à la charge par induction.

Le système de régulation d'un générateur onduleur à commutateurs alimentant une charge par induction, la charge présentant l'impédance d'un circuit résonant série et étant montée en série avec la sortie de l'onduleur par l'intermédiaire d'au moins deux interrupteurs constitués par des commutateurs comportant chacun un élément de commutation dont les bornes de commutation sont connectées en parallèle avec une diode, objet de l'invention, est remarquable en ce qu'il comprend une boucle d'asservissement en fréquence de la tension d'alimentation délivrée par l'onduleur à une fréquence voisine de la fréquence propre propre de la charge, variable en fonction de l'état magnétique de celle-ci.

Le système de régulation d'un générateur onduleur à commutateurs objet de l'invention trouve application à tout type de four à induction, utilisé normalement pour la fusion des métaux, le réchauffage avant formage, le traitement thermique, les traitements de surface, le soudage et le brasage.

L'invention sera mieux comprise à la lecture de la description et à l'observation des dessins ci-après dans lesquels :

- les figures 1a à 1d représentent, respectivement, un schéma de principe d'un thyristor dual, un - schéma d'un onduleur en demi-pont muni de commutateurs constitués par des thyristors duals, les formes d'onde des courants et tensions aux points de tests correspondants de la figure 1b, et la forme d'onde du courant de charge IRLC et de la tension aux bornes du transistor t2 et du courant de diode ID$_2$ correspondant,

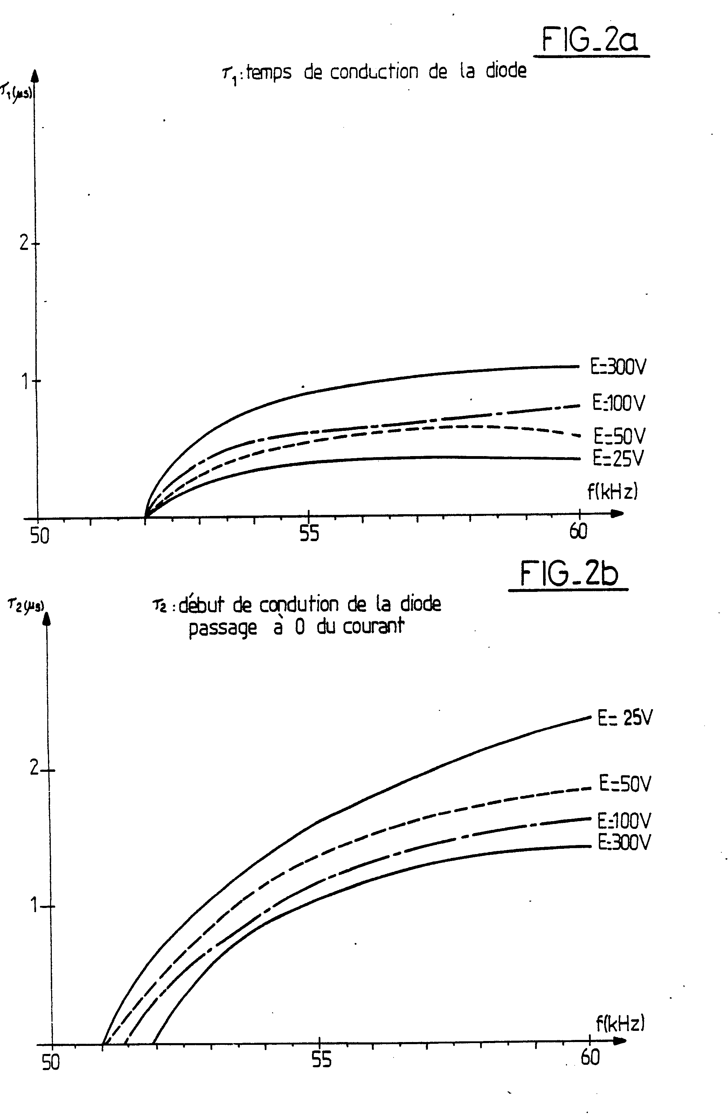

- les figures 2a et 2b représentent respectivement la variation du temps de conduction de la diode branchée en parallèle sur les bornes de commutation de l'élément de commutation constituant commutateur et retard $\tau_2$ du début de conduction de cette même diode par rapport à l'instant d'annulation du courant de charge IRLC, fonction de la fréquence de la tension d'alimentation et pour différentes valeurs de l'amplitude E de celle-ci,

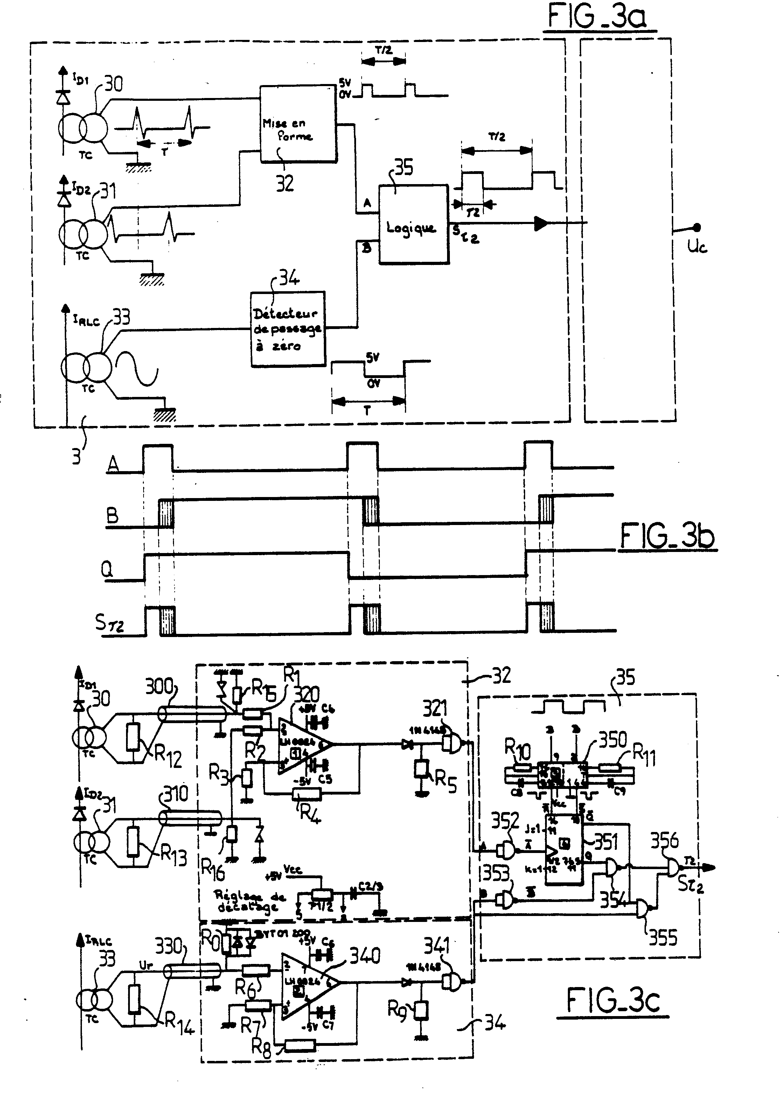

- les figures 3a, 3b et 3c représentent respectivement un schéma synoptique d'un circuit de mesure du retard $\tau_2$ du début de conduction des diodes D$_1$, D$_2$ par rapport à l'instant d'annulation du courant de charge IRLC, et de correction de fréquence de la tension d'alimentation, les formes d'onde remarquables de signaux engendrés par le schéma synoptique représenté en figure 3a et un mode de réalisation particulièrement avantageux non limitatif du schéma synoptique de la figure 3a en technologie hybride,

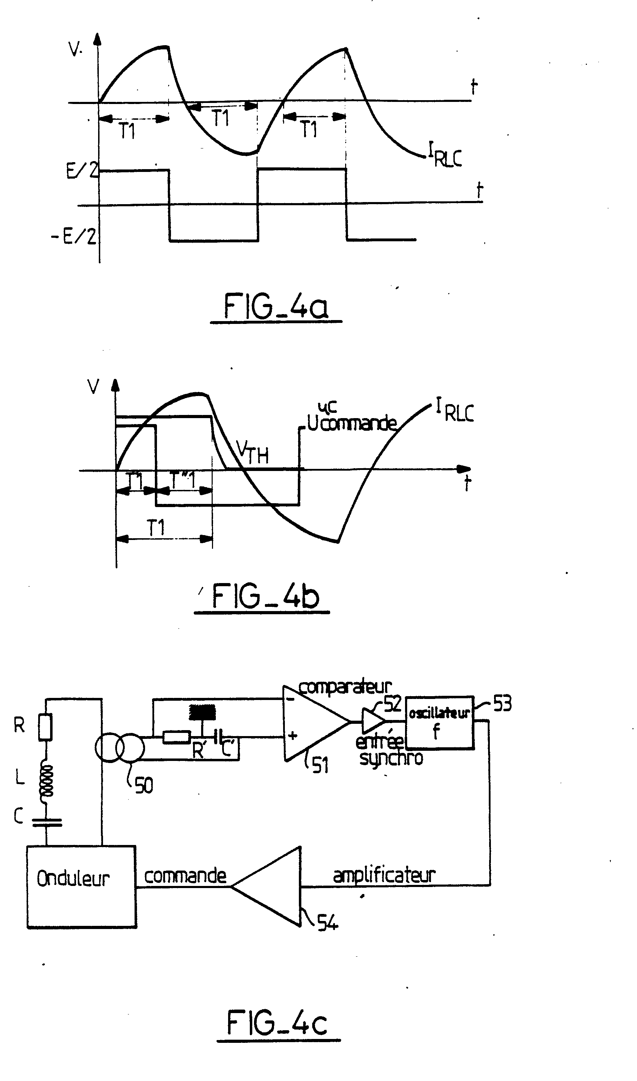

- les figures 4a, 4b et 4c représentent respectivement la forme d'onde du courant de charge IRLC en comparaison à la tension d'alimentation délivrée par le générateur, la forme d'onde de ce même courant de charge IRLC en comparaison à la tension de commande U C,commande appliquée à l'entrée de l'onduleur, et le schéma synoptique représentatif d'une boucle d'amorçage d'auto-oscillation permettant d'assurer le démarrage du générateur,

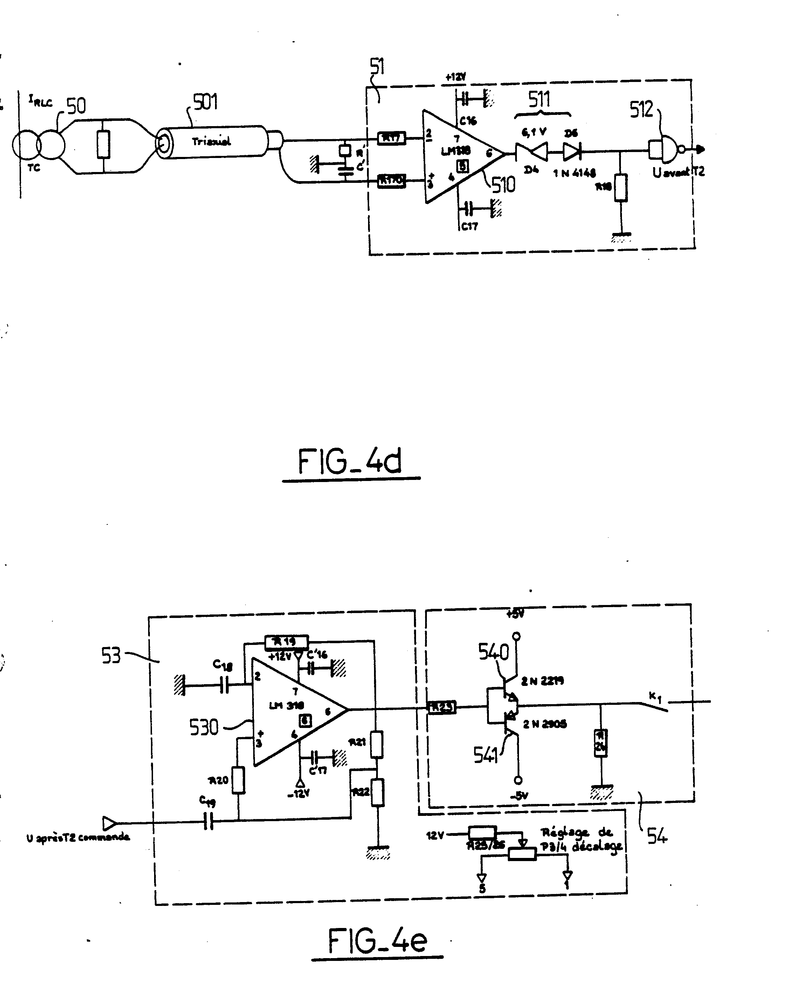

- les figures 4d et 4e représentent un mode de réalisation particulièrement avantageux de la boucle d'asservissement d'auto-oscillation au démarrage,

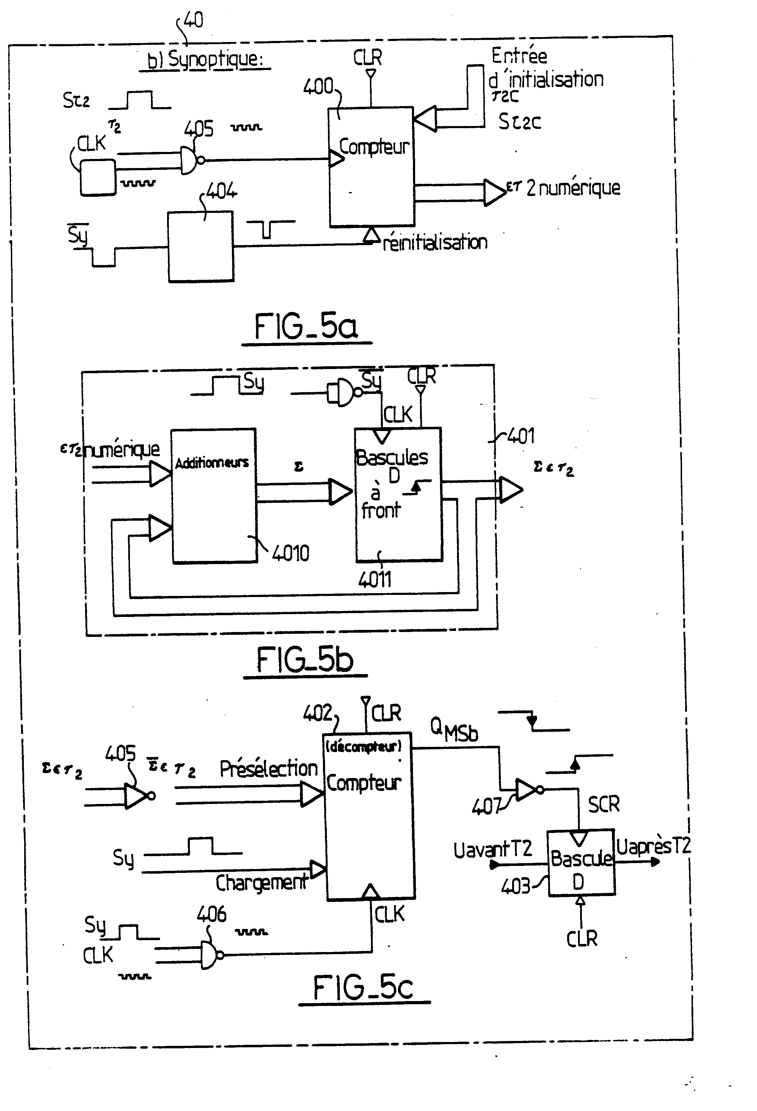

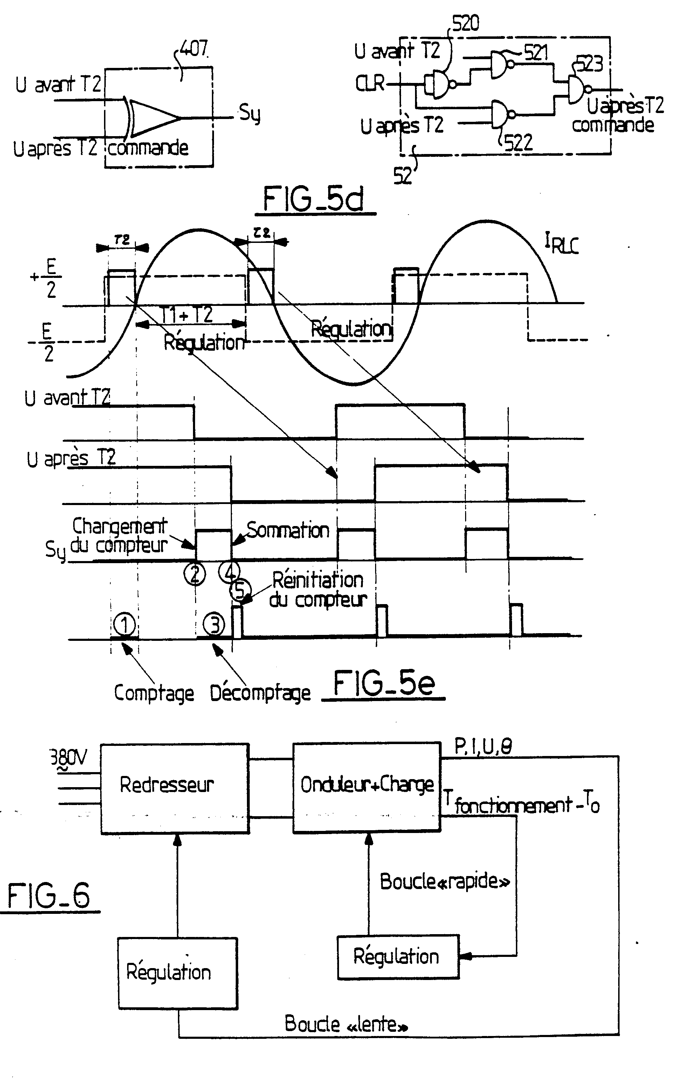

- les figures 5a, 5b, 5c, 5d représentent un mode de réalisation particulièrement avantageux en technologie numérique rapide du circuit de correction de fréquence de la tension d'alimentation délivrée à la charge par l'onduleur, la figure 5e représente un chronogramme des signaux de commande des différents éléments des figures 5a, 5b, 5c et 5d par rapport au courant de charge IRLC,

- la figure 6 représente un schéma synoptique général d'un système de régulation selon l'invention muni d'une boucle de régulation de niveau de puissance.

Le système de régulation d'un générateur à onduleur à commutateurs alimentant une charge par induction conforme à l'objet de la présente invention sera tout d'abord décrit en relation avec les figures 1a à 1d.

Ainsi qu'il apparaît notamment en figure 1b, la charge constituée par l'inducteur et le matériau à traiter présente l'impédance d'un circuit résonant série, noté R,L,C, sur cette figure. Cette charge est montée en série avec la sortie de l'onduleur, entre les points a et b de ce dernier. La charge constituant circuit résonant série R,L,C est montée à la sortie de l'onduleur par l'intermédiaire d'au moins deux interrupteurs notés 1 et 2 sur la figure 1b. Ces interrupteurs peuvent être constitués par des commutateurs comportant chacun un élément de commutation noté t1 et t2 sur la figure 1b. Les bornes de commutation de chaque élément de commutation t1 et t2 sont connectées en parallèle avec une diode D$_1$, D$_2$ respectivement et une capacité C1, C2.

De manière classique, les interrupteurs 1 et 2 peuvent être constitués par des commutateurs commandables à l'ouverture, par exemple des thyristors munis d'un circuit d'extinction.

De manière plus avantageuse, les éléments de commutation t1 et t2 peuvent être constitués par des transistors et ainsi qu'il a été rappelé dans l'introduction à la présente description, les transistors t1, t2 munis de leurs diodes D1 et D2 et de leurs capacités C1 et C2 tels que représentés en figures 1a et 1b sont configurés de façon à constituer des thyristors duals.

Les thyristors duals sont des composants parfaitement connus et définis dans la technique, pour lesquels on rappellera simplement que l'interrupteur équivalent ne peut être rendu passant que si la tension à ses bornes est nulle ou très voisine de zéro, un auto-blocage de l'interrupteur constitué par le thyristor dual intervenant si le courant dans cet interrupteur dépasse une valeur limite déterminée. Dans le mode de réalisation tel que représenté en figure 1b, l'interrupteur 1 ou 2 s'ouvre immédiatement, au temps de stockage près,lorsque l'ordre lui en est donné et c'est donc l'ouverture de ces interrupteurs qui fixe la fréquence de fonctionnement de l'onduleur.

Sur la figure 1c, on a représenté les différentes formes d'onde, présentes aux points de tests a et b de la figure 1b, ainsi que les courants présents dans les éléments essentiels du dispositif, tel que par exemple l'intensité transitant par les transistors t1 et t2 la tension présente aux bornes des transistors t1 et t2, bornes de commutation, l'intensité transitant dans les diodes D$_1$ et D$_2$ et l'intensité transitant dans les capacités C1 et C2, branchées en parallèle sur les diodes $D_1$ et $D_2$. Les formes d'onde représentées en figure 1c correspondent à un signal de commande UC de l'onduleur, tel que représenté en figure 1b.

Conformément à une caractéristique essentielle du système de régulation objet de l'invention, ce système comprend une boucle d'asservissement en fréquence de la tension d'alimentation, notée E, délivrée par l'onduleur aux bornes de la capacité C3, cette tension se répartissant dans le montage en demi-pont représenté en figure 1b, en tension d'alimentation d'amplitude E/2 sur les capacités C4 et C5 constitutives du demi-pont. De manière particulièrement avantageuse, la fréquence de la tension d'alimentation délivrée par l'onduleur est asservie à une fréquence voisine de la fréquence propre de la charge, fréquence variable en fonction de l'état magnétique de celle-ci. Le générateur peut également être équipé de quatre interrupteurs et être configuré en un montage en pont complet. Ces interrupteurs sont alors commandés par paire et le temps de conduction des diodes s'établit toujours sur deux diodes.

Conformément à un aspect particulièrement avantageux du système de régulation d'un générateur onduleur à commutateurs objet de l'invention, la boucle d'asservissement en fréquence consiste en une boucle de régulation du temps de conduction, noté $\tau_1$ d'une diode $D_1$, $D_2$ branchée en parallèle sur un élément de commutation t1, t2 et/ou de l'intervalle de temps $\tau_2$ séparant l'instant de début de conduction de ladite diode et l'instant d'annulation du courant de charge IRLC circulant dans la charge au cours du fonctionnement.

Sur la figure 1d, on a représenté respectivement le courant de charge IRLC circulant dans la charge au cours du fonctionnement, ainsi que la tension aux bornes du transistor t2 aux bornes de commutation de celui-ci, et le courant circulant dans la diode $D_2$ correspondante.

Ainsi qu'il apparaît sur la figure 1d, lorsque, en l'absence de régulation, la fréquence de fonctionnement c'est-à-dire la fréquence de la tension d'alimentation délivrée par l'onduleur tend à devenir inférieure à la fréquence propre de la charge, le temps de retard ou intervalle de temps $\tau_2$ séparant l'instant d'annulation du courant de charge IRLC et l'instant de début de conduction de la diode, tend à s'annuler et l'onduleur se bloque.

La régulation de la fréquence de fonctionnement peut donc être effectuée de façon à ce que celle-ci, de manière avantageuse, soit maintenue toujours supérieure à la fréquence propre de la charge, fréquence de résonance du circuit R,L,C, la fréquence de fonctionnement étant ainsi maintenue légèrement supérieure à cette dernière, pour maintenir la transmission d'énergie à la charge à son niveau maximum.

Sur les figures 2a et 2b, on a représenté respectivement le temps $\tau_1$ de conduction de la diode $D_1$ ou $D_2$ considérée, puis le retard du passage à zéro du courant de charge IRLC par rapport au début de conduction de la diode, ce retard étant noté $\tau_2$, en fonction de la fréquence de la tension d'alimentation délivrée par l'onduleur, pour différentes valeurs de l'amplitude E de celle-ci.

Selon une caractéristique avantageuse du système de régulation objet de l'invention, la boucle d'asservissement en fréquence pourra avantageusement être régulée en fonction du temps ou intervalle de temps $\tau_2$ séparant l'instant de début de conduction de la diode et l'instant de passage par zéro du courant de charge IRLC, la pente moyenne de la courbe représentée en figure 2b étant en fait beaucoup plus importante que celle de la courbe représentative du temps de conduction de la diode correspondante, notamment à faible puissance. Cependant, la régulation à partir du paramètre du temps de conduction $\tau_1$ n'est pas exclue.

Un mode de réalisation particulièrement avantageux d'un système de régulation conforme à l'objet de la présente invention, et en particulier de la boucle de régulation en fréquence sera maintenant décrit plus particulièrement en liaison avec les figures 3a à 3c.

Ainsi qu'on le remarquera sur le mode de réalisation de la boucle d'asservissement en fréquence représentée en figure 3a, celle-ci comporte, de manière avantageuse, des moyens 3 capteurs de mesure de l'intervalle de temps $\tau_2$ séparant l'instant de début de conduction de la diode et l'instant d'annulation du courant de charge IRLC. En outre, des moyens 4 de correction de la fréquence de la tension E délivrée par l'onduleur en fonction de la valeur de l'intervalle de temps $\tau_2$ par rapport à une valeur de référence sont en outre prévus de façon à corriger la fréquence du signal de commande UC de l'onduleur.

Les moyens 4 de correction de la fréquence de la tension délivrée par l'onduleur pourront consister, à titre d'exemple non limitatif, en des moyens de correction à commande intégrale, en fonction de la valeur de l'intervalle de temps $\tau_2$ par rapport à une valeur de référence, ainsi qu'il sera décrit ultérieurement dans la description.

Ainsi qu'il est représenté en outre en figure 3a, les moyens capteurs 3 comprennent avantageusement des premiers moyens 30 de détection du courant transitant dans la diode $D_1$ et des deuxièmes moyens 31 de détection du courant transitant dans la diode $D_2$. Des moyens 32 de mise en forme des signaux délivrés par les premiers et deuxièmes moyens détecteurs 30 et 31 permettent d'engendrer un signal périodique A de fréquence double de celle des courants transitant dans les diodes $D_1$ et $D_2$. Des troisièmes moyens de détection 33 permettent d'assurer la détection de l'intensité IRLC transitant dans la charge et délivrent un signal représentatif de cette intensité. Bien entendu, on notera que les premiers, deuxièmes, troisièmes moyens de détection 30, 31 et 33 peuvent avantageusement être constitués par des transformateurs de courant notés TC sur la figure 3a. Des moyens 34 de détection de passage à zéro du signal de détection délivré par_des troisièmes moyens 33 de détection de l'intensité IRLC permettent, lors du passage à zéro précité, de délivrer une impulsion notée B. Un circuit logique 35 reçoit d'une part le signal périodique de fréquence double de celle des courants transitant dans les diodes $D_1$ et $D_2$ et d'autre part, les impulsions B délivrées par les moyens de détection de passage à zéro. Le circuit logique 35 délivre ainsi un signal périodique rectangulaire noté $S_{\tau 2}$ dont le rapport cyclique est représentatif de l'intervalle de temps $\tau_2$ ou retard du courant IRLC transitant dans la charge par rapport à l'instant de mise en conduction de l'une ou l'autre diode.

Bien entendu, et de manière avantageuse non limitative, le signal $S_{\tau 2}$ pourra être configuré de façon que sur une demi-période notée T/2, l'impulsion délivrée soit une mesure directe du retard $\tau_2$ précité.

La figure 3b représente les formes d'onde remarquables de signaux engendrés par le schéma synoptique représenté en figure 3a, telles qu'engendrées conformément au mode de réalisation particulièrement avantageux non limitatif de la figure 3c.

Selon la figure 3c précitée, les moyens 32 de mise en forme des signaux délivrés par les premiers et deuxièmes moyens détecteurs 30 et 31 comportent avantageusement un amplificateur opérationnel 320, dont l'entrée négative reçoit les signaux délivrés par les premiers et deuxièmes moyens de détection 30, 31, et dont l'entrée positive est connectée en réaction avec la sortie de cet amplificateur. Une bascule 321 de type monostable permet d'assurer la mise en forme des signaux sommés délivrés par l'amplificateur sommateur 320.

Conformément au même mode de réalisation de la figure 3c, le circuit logique 35 comprend avantageusement une première bascule monostable RS notée 350, recevant sur deux entrées des impulsions B délivrées par les moyens de détection 34 de passage à zéro du signal de détection, et une deuxième bascule monostable de type JK notée 351, recevant d'une part, le signal A délivré par le circuit logique ou bascule 321 de type monostable et délivrant le signal périodique rectangulaire dont le rapport cyclique est représentatif de l'intervalle de temps $\tau_2$. Le signal A est reçu par la deuxième bascule monostable JK 351 par l'intermédiaire d'un circuit monostable inverseur 352, de façon à délivrer à la bascule monostable JK un signal complémenté $\overline{A}$. La deuxième bascule monostable 351 reçoit d'autre part les sorties complémentées $\overline{R}$, $\overline{S}$ délivrées par la première bascule monostable RS 350. La deuxième bascule JK 351 délivre deux signaux complémentés Q et $\overline{Q}$ lesquels permettent d'engendrer le signal périodique rectangulaire dont le rapport cyclique est représentatif de l'intervalle de temps $\tau_2$ par l'intermédiaire d'un premier monostable 353, permettant d'engendrer à partir des impulsions B des impulsions complémentées $\overline{B}$, d'une première porte 354, porte de type NON-ET, recevant sur une première entrée le signal Q et sur une deuxième entrée le signal $\overline{B}$ précité, d'une deuxième porte NON-ET 355 recevant sur une première entrée les impulsions B et sur une deuxième entrée le signal $\overline{Q}$, et d'une troisième porte NON-ET 356, recevant sur une première, respectivement deuxième entrée, le signal de sortie délivré par la première respectivement deuxième porte NON-ET 354, 355, et délivrant le signal périodique $S_{\tau 2}$ dont le rapport cyclique est représentatif de la durée $\tau_2$.

Sur la figure 3b on a représenté les impulsions A, B, Q et $S_{\tau 2}$ successivement.

Ainsi, le signal périodique $S_{\tau 2}$ dont le rapport cyclique est représentatif de la durée $\tau_2$, et avantageusement de la durée $\tau_2$ directement mesurée, est de la forme $S_{\tau 2} = B\ \overline{Q} + \overline{B}\ Q$. Le signal $S_{\tau 2}$ est ainsi délivré aux moyens 4 de correction de la fréquence de la tension délivrée par l'onduleur, en fonction de la valeur de l'intervalle de temps $\tau_2$ par rapport à une valeur de référence, lesquels seront décrits ultérieurement dans la description.

Ainsi qu'il est en outre représenté en figure 3c, les moyens 34 de détection de passage à zéro du signal de détection peuvent être réalisés à partir d'un amplificateur opérationnel 340, dont l'entrée négative reçoit le signal détecté par les troisièmes moyens détecteurs 33 et dont l'entrée positive est reliée à la tension de référence par l'intermédiaire d'une résistance de polarisation R7, une réaction étant en outre réalisée par une résistance R8 entre la sortie de l'amplificateur opérationnel 340 et l'entrée positive de cet amplificateur. Un monostable 341 permet également la mise en forme des signaux délivrés par l'amplificateur opérationnel 340, pour délivrer les signaux B tels que représentés en figure 3b.

Sur l'ensemble des schémas de la figure 3c, on notera bien entendu la présence d'éléments résistifs notés R0, R1, .... R17, lesquels constituent des éléments de polarisation ou de câblage, dont les valeurs sont normalement indiquées par le constructeur des éléments correspondants constitués par les amplificateurs opérationnels 320, 340, les monostables 321, 341, les bascules de type RS 350 et de type JK 351 par exemple. Une description détaillée des valeurs permettant le câblage de l'ensemble de ces éléments n'est donc pas nécessaire.

Afin d'obtenir un bon fonctionnement du mode de réalisation du capteur 3 représenté en figure 3c, il est avantageux de réaliser des montages compacts, afin de diminuer le plus possible l'influence du bruit électromagnétique. En particulier, la liaison entre les premiers, deuxièmes et troisièmes moyens détecteurs 30, 31, 33 et l'entrée des amplificateurs opérationnels 320 et 340, est avantageusement réalisée par l'intermédiaire de câbles coaxiaux, notés 300, 310, 330, les amplificateurs choisis 320 et 340 étant des amplificateurs normalement disponibles dans le commerce, mais présentant un faible temps de montée et une grande sensibilité.

Afin d'obtenir un fonctionnement correct de l'ensemble tel que représenté en figure 3c, il est avantageux que la sortie Q de la bascule JK 351 bascule à chaque demi-période,même si aucune conduction de diodes n'est détectée, le signal A restant au niveau logique bas zéro. Dans ce but, on force la sortie Q à la valeur 1, niveau logique haut, à la montée de B, et à un niveau logique bas zéro à la descente du signal B. Cette disposition permet en quelque sorte la remise à zéro de la bascule JK 351.

Ainsi, la régulation en fréquence, la fréquence de la tension d'alimentation étant asservie à une fréquence voisine et supérieure à la fréquence propre de la charge, consiste essentiellement à réguler un temps tel que le temps de conduction des diodes ou le temps de retard du passage à zéro du courant de charge IRLC par rapport au début de conduction des diodes, temps en tout état de cause inférieur à la microseconde.

La mesure de ce temps étant effectuée ainsi que décrit précédemment avec une précision et une immunité au bruit suffisante pour permettre une régulation efficace, il faut encore que la fréquence de l'onduleur soit supérieure à la fréquence propre de la charge et notamment au démarrage. Lors du démarrage de l'inducteur, cette fréquence propre de la charge est inconnue.

Plutôt que d'effectuer une mesure de la fréquence propre fo de la charge, mesure qui reste d'ailleurs peu pratique à mettre en oeuvre dans les conditions de fonctionnement habituelles, le système de régulation objet de l'invention est en outre remarquable en ce qu'il comporte une boucle de commande de démarrage en auto-oscillation à une fréquence f supérieure à la fréquence de résonance fo de la charge.

La charge étant un circuit résonnant de type R,L,C, ainsi que déjà décrit, l'onduleur peut être considéré comme constitué par un élément non linéaire qui applique alternativement une tension d'alimentation d'amplitude E/2 ou - E/2 à la charge.

Sur la figure 4a, on a représenté la variation du courant IRLC, en réponse aux transitions successives de E/2 à -E/2 de la tension d'alimentation délivrée par l'onduleur à un circuit de charge de fréquence propre fo, le temps T1 sur la figure 4a représentant le temps de conduction d'un interrupteur considéré. Le circuit correspondant est instable et il oscille à une fréquence supérieure à $\frac{\Omega 0}{2\pi}$ , cette fréquence dépendant du temps de conduction T1.

Sur la figure 4b, on a représenté la même forme d'onde relative au courant IRLC, par rapport à la tension de commande UC de l'onduleur. On remarquera que le temps de conduction T1 comprend le temps de retard T'1 entre le passage à zéro du courant IRLC et l'ordre de commutation UC et le temps de retard T"1 entre l'ordre de commutation UC et la commutation effective des transistors t1 et t2, retard de la commande plus temps de stockage des transistors. Le temps T"1 dépend des caractéristiques du montage et des caractéristiques du transistor utilisé.

Afin d'obtenir une mesure du temps de retard T'1 entre le passage à zéro du courant IRLC et l'ordre de commutation UC, la boucle de commande de démarrage en auto-oscillation comprend ainsi que représenté en figure 4c, des moyens notés 50 détecteurs du courant de charge IRLC et un circuit à résistance capacité noté R'C' permettant d'engendrer, en fonction du courant de charge IRLC, une tensin UR' proportionnelle au courant de charge IRLC et une tension UC'déphasée de $\frac{\pi}{2}$ par rapport à la tension UR' et par rapport au courant de charge IRLC. La borne commune de la résistance R' et de la capacité C' est connectée au potentiel de référence. Un comparateur 51 dont la borne positive est connectée à la borne de la résistance R' reliée aux moyens détecteurs et dont la borne négative est reliée à la capacité C' reliée aux moyens détecteurs 50 est en outre prévu, et un circuit de commande 52 reçoit des signaux délivrés par le comparateur 51 et délivre un signal de commande de régulation.

Ainsi qu'il apparaît en outre en figure 4c, la boucle de commande comprend également un oscillateur 53 commandé, recevant du circuit de commande 52 un signal de commande inhibition d'amorçage. L'oscillateur 53 est adapté à engendrer un signal sensiblement rectangulaire de fréquence f très supérieure à la fréquence de résonance fo de la charge en l'absence de signal de commande d'inhibition d'amorçage et un signal de fréquence identique à celle du signal de commande d'inhibition, en présence de celui-ci.

Compte tenu du mode de réalisation du circuit R', C' permettant la détection du courant IRLC ainsi que précédemment décrit, le temps de retard T'1 vérifie la relation :

$$T'1 = \frac{T}{2\pi} \, Arctg. \left(\frac{T}{2\pi R'C'}\right)$$

où T représente la période du signal de commande UC. Le signal délivré par l'oscillateur 53 à fréquence f, par exemple de l'ordre de 80 kHz, peut alors être amplifié si nécessaire par l'intermédiaire d'un amplificateur 54 et utilisé pour commander en phase de démarrage l'onduleur tel que représenté en figure 4c.

Sur la figure 4d, on a représenté un mode de réalisation avantageux du comparateur 51, représenté en figure 4c, en particulier la liaison entre les moyens détecteurs 50 et le comparateur 51 peut avantageusement être effectuée par l'intermédiaire d'un câble triaxial 501, permettant d'immuniser le signal délivré par les moyens détecteurs 50 de toute influence électromagnétique parasite. Le comparateur 51 peut comprendre un amplificateur opérationnel 510 dont l'entrée négative reçoit par exemple la tension UR' délivrée aux bornes de la résistance R', par l'intermédiaire d'une résistance R17, et dont l'entrée positive reçoit la tension UC' délivrée par la capacité C' par l'intermédiaire d'une résistance R170. Les capacités notées C16 et C17 sont des capacités de câblage de l'amplificateur opérationnel 510 dont les valeurs sont données directement par le constructeur. Un circuit limiteur 511 constitué par une diode Zener et une diode notée respectivement D4 et D5 permet d'attaquer un étage de sortie 512 constitué par un monostable par l'intermédiaire d'une résistance R18. Le monostable 512 délivre le signal de sortie du comparateur, signal dénommé U avant T2. Le signal dénommé U avant T2 délivré par le comparateur 51 est alors reçu par le circuit de commande 52, lequel a pour fonction essentielle d'apporter un retard déterminé au signal U avant T2 pour engendrer un signal U après T2 commande, permettant la commande de l'oscillateur 53.

Un mode de réalisation avantageux de l'oscillateur 53 commandé par le signal U après T2 commande engendré par le circuit de commande 52, lequel sera décrit ultérieurement dans la description, sera maintenant décrit en liaison avec la figure 4e. Sur la figure précitée, l'oscillateur commandé 53 peut comprendre avantageusement un amplificateur opérationnel 530 dont l'entrée positive est connectée en réaction avec l'entrée négative, par l'intermédiaire de résistances notées R20, R22, R21 et R19. L'entrée négative de l'amplificateur opérationnel 530 est en outre connectée à la tension de référence par l'intermédiaire d'une capacité notée C18. L'entrée de commande de l'oscillateur 53 reçoit un signal de commande d'inhibition d'amorçage, signal consitué par le signal U après T2 commande,délivré par le circuit de commande 52 et est effectué sur la·borne positive de l'amplificateur opérationnel par l'intermédiaire d'une capacité de liaison C19 et de la résistance R20.

Ainsi, en l'absence du signal U après T2 commande constituant le signal de commande d'inhibition d'oscillation ou d'amorçage, l'oscillateur 53 oscille spontanément à la fréquence f, laquelle peut être prise égale à une valeur relativement élevée et en tout cas supérieure à 80 kHz. En présence du signal de commande d'inhibition d'amorçage, le signal U après T2 commande étant délivré par le circuit de commande 52, l'oscillateur 53 se cale au contraire sur la fréquence du signal de commande inhibition d'amorçage, U après T2 commande,et délivre celui-ci à l'étage d'amplification 54. On notera en outre que l'oscillateur 53 comprend avantageusement au niveau de l'amplificateur opérationnel 530 un réglage de décalage réalisé par les résistances R25, R26 et par un potentiomètre noté P3,4. De même, l'étage d'amplification 54 peut comprendre avantageusement deux transistors 540, 541, complémentés jouant le rôle d'amplificateurs séparateurs et reliés à la sortie de l'amplificateur opérationnel 530 par une résistance 23, l'émetteur du transistor 540, 541 étant chargé par une résistance R24. Un interrupteur K1 permet de relier la sortie de l'amplificateur 54 à la commande de l'onduleur.

Une description détaillée des moyens 4 de correction de la fréquence de la tension UC de commande sera donnée en liaison avec les figures 5a, 5b,5c, 5d.

Selon les figures précitées, les moyens 4 de correction de la fréquence de la tension UC comportent en outre des moyens 40 de retard du signal de commande de régulation d'une durée proportionnelle à l'intégrale de la valeur de la durée $\tau_2$,à chaque demi-période de signal de commande,par rapport à une valeur de durée de consigne $\tau_2 C$. Les signaux correspondants représentatifs d'une durée $\tau_2$ et $\tau_2 C$ sont notés $S\tau_2$ et $S\tau_{2C}$.

Les moyens 40 de retard précités comportent ainsi que représenté en figure 5a, une horloge rapide notée CLK délivrant des impulsions base de temps de référence à une fréquence très élevée. De préférence, l'horloge rapide CLK délivre des impulsions base de temps à une fréquence de 40 MHz.

Les moyens 40 de retard comportent en outre des moyens numériques 400 du comptage du nombre d'impulsions base de temps de référence, entre les instants correspondants à la valeur de la durée $\tau_2$ du signal $S\tau_2$ de la demi-période considérée du signal de commande et la valeur de la durée de consigne

$\tau_{2c}$de référence du signal $S\tau_{2c}$. Les moyens numériques 400 permettent,par comptage,d'engendrer un signal numérique représentatif de l'erreur $\epsilon\tau_2$ entre la durée $S\tau_2$ et la valeur de durée de consigne $S\tau_{2c}$. Les moyens de comptage numérique 400 peuvent avantageusement être constitués par un compteur huit bits par exemple. Celui-ci reçoit sur une entrée de réinitialisation, un signal engendré à partir d'un signal de synchronisation noté Sy complémenté par l'intermédiaire d'un monostable lent 404. Le comptage des impulsions d'horloge délivrées par l'horloge CLK est effectué par l'intermédiaire d'une porte logique de type ET 405, recevant sur une de ses entrées les impulsions délivrées par l'horloge CLK et sur l'autre entrée le signal $S\tau_2$ représentatif de la durée $\tau_2$. Le signal résultant délivré par la porte 405 est directement délivré sur le compteur ou moyen numérique de comptage 400, lequel comporte en outre une entrée d'initialisation et de réglage d'offset, l'entrée d'initialisation permettant bien entendu d'entrer la valeur de la durée de consigne $\tau_{2c}$. Les moyens numériques de comptage 400 délivrent directement un signal numérique $\epsilon\tau_2$ représentatif de l'erreur entre la durée $S\tau_2$ et la valeur de durée de consigne $S\tau_{2c}$.

Les moyens de retard 40 du signal de commande de régulation comprennent en outre des moyens intégrateurs numériques notés 401, représentés en figure 5b, permettant à partir du signal numérique représentatif de l'erreur $\epsilon\tau_2$ entre la durée $S\tau_2$ et la valeur de durée de consigne $S\tau_{2c}$ d'engendrer un signal numérique représentatif de l'intégrale notée $\Sigma\epsilon\tau_2$. Le signal $\Sigma\epsilon\tau_2$ représentatif de l'intégrale précitée est délivré par les moyens intégrateurs numériques 401 à partir du signal $\epsilon\tau_2$ numérique délivré par les moyens numériques de comptage 400. Bien entendu, une liaison par BUS appropriée est réalisée entre les moyens de comptage numériques 400 et les moyens intégrateurs numériques 401.

En outre, des moyens décompteurs 402 permettent également, à partir du signal numérique représentatif de l'intégrale $\Sigma\epsilon\tau_2$ complémenté, notamment à partir de la valeur complémentée du bit de comptage le plus significatif noté QMSb,d'engendrer sur transition négative de celui-ci un signal de commande de retard. Le signal de commande de retard est noté SCR sur la figure 5c.

Un circuit de retard 403 constitué par une bascule de type D reçoit en entrée de retard le signal de commande de retard désigné U avant T2 ou signal de commande de régulation et en entrée de commande le signal de commande de retard désigné par SCR précédemment. Le circuit de retard 403 délivre ainsi un signal de commande retardé désigné par U après T2, le signal de commande de régulation ayant ainsi été retardé de la valeur T2. On remarquera en particulier sur la figure 5c que les moyens décompteurs 402 permettent, à partir du signal numérique représentatif de l'intégrale $\Sigma\epsilon\tau_2$ complémenté, par l'intermédiaire d'un inverseur 405 d'un signal de synchronisation noté Sy, amené sur une entrée de chargement des moyens décompteurs 402,et d'un signal à fréquence horloge CLK délivré en coïncidence avec le signal de synchronisation Sy par l'intermédiaire d'une porte 406,d'engendrer un bit de comptage le plus significatif QMSb. Un inverseur 407 permet à partir du bit de comptage le plus significatif précédemment cité d'obtenir le signal de commande SCR.

On remarquera en outre que les moyens de comptage numériques 400 et les moyens décompteurs 402 recoivent un signal noté CLR permettant l'inhibition de la mise en fonctionnement du moyen 40 de retard du signal de commande et de régulation et en définitive, de la régulation elle-même. Les circuits de mise en oeuvre de ce signal CLR ne seront pas décrits, mais on signalera simplement, à titre d'exemple non limitatif, que le signal CLR peut occuper deux niveaux logiques complémentés correspondant à une présence de régulation ou à une absence de régulation en fonction par exemple du niveau du courant IRLC, détecté par rapport à une valeur de référence arbitraire choisie. Ainsi, après redressement du courant IRLC par exemple, la tension redressée représentative du courant IRLC redressé peut être comparée à une valeur de référence, le résultat de la comparaison permettant d'engendrer les deux niveaux logiques précédemment décrits.

Selon un mode de réalisation avantageux du système intégrateur 401 représenté en figure 5b, les moyens intégrateurs numériques précités, peuvent comprendre un additionneur numérique 4010 à deux entrées, une première entrée recevant le signal numérique $\epsilon\tau_2$ représentatif de l'erreur entre la durée $S\tau_2$ et la durée de consigne $S\tau_{2c}$. L'additionneur 4010 délivre un signal numérique de l'intégrale $\Sigma\epsilon\tau_2$. En outre, les moyens intégrateurs numériques 401 comprennent un circuit mémoire tampon 4011 recevant en écriture le signal représentatif de l'intégrale $\Sigma\epsilon\tau_2$ et délivrant en lecture ce même signal, la sortie lecture étant en outre connectée en réaction sur la deuxième entrée du circuit additionneur 4010. De préférence, l'additionneur numérique 4010 peut être constitué par un additionneur 12 bits et le circuit mémoire tampon 4011 par des bascules D à front montant sur 12 bits.

La figure 5d représente différents modes de réalisation du signal de synchronisation Sy représenté aux figures 5a, 5b, 5c, ainsi qu'un mode de réalisation particulier du circuit de commande 52 permettant d'engendrer le signal de commande d'inhibition de l'oscillateur 53, soit le signal U après T2.

En ce qui concerne l'obtention des signaux de synchronisation Sy, ceux-ci peuvent, ainsi que représentés en figure 5d,être obtenus à partir d'un circuit de type OU exclusif 407 recevant sur deux entrées le signal dénommé U avant T2 et le signal U après T2 commande. Le signal U après T2 commande peut être obtenu à partir du circuit 52 tel que représenté en figure 5d, lequel, à partir d'un monostable 520 recevant le signal CLR précédemment décrit, d'une porte NON-ET 521 recevant le signal U avant T2 délivré par le comparateur 53 et le signal délivré par le monostable 520, et d'une autre porte NON-ET 522 recevant le signal CLR et le signal U après T2 délivré par la sortie des moyens 40 de retard du signal de commande de régulation et en particulier par le circuit de retard 403 de la figure 5c, permet d'obtenir à partir d'une troisième porte NON-ET 523 recevant les signaux délivrés par les portes NON-ET 521 et 522, le signal U après T2 commande constituant commande d'inhibition de l'oscillateur 53, afin de caler celui-ci à la fréquence du signal U après T2 commande, après la période d'amorçage.

Une description détaillée du fonctionnement des moyens 40 de retard du signal de commande de régulation d'une durée proportionnelle à l'intégrale de la valeur de la durée $\tau_2$ du signal $S\tau_2$, à chaque demi-période du signal de commande, par rapport à une valeur de durée de consigne $S\tau_{2c}$ sera maintenant donnée en liaison avec la figure 5e.

Sur la figure 5e, on a représenté un chronogramme des différents signaux essentiels tels que notamment le courant de charge IRLC, le signal $S\tau_2$ dont l'impulsion sur une demi-période de T/2 a une durée $\tau_2$ et la tension d'alimentation délivrée par l'onduleur d'amplitude + E/2 - E/2 appliquée au commutateur et à la charge. Sur la figure 5e, on a représenté le temps de conduction de l'interrupteur correspondant, à partir de l'instant d'annulation du courant de charge IRLC, pendant l'impulsion positive + E/2 de la tension d'alimentation pour une valeur de déphasage $\tau_2$ donnée de ce même courant IRLC par rapport à l'impulsion + E/2 de la tension d'alimentation. Ce temps de conduction se décompose en deux parties T1 et T2, le temps T1 correspondant au temps T'1 et T"1 précédemment décrit, et le temps T2 étant apporté par la régulation et en particulier par les moyens 40 de retard du signal de commande de régulation d'une durée proportionnelle à l'intégrale de la valeur de la durée $\tau_2$ du signal $S\tau_2$ précité.

Une étude mathématique du circuit de charge résonnant R,L,C, ce circuit étant considéré en première approximation comme fonctionnant en régime sinusoïdal, montre que les paramètres T1, T2, $\tau_2$ représentés en figure 5e vérifient respectivement les relations

$$\tau_2 = \frac{T}{2\pi} \text{ Arctg. } \frac{L}{R} \left( \frac{2\pi}{T} - \frac{1}{RC} \frac{T}{2\pi} \right)$$

$$T1 = cte + \frac{T}{2\pi} \text{ Arctg. } \frac{T}{2\pi R'C'}$$

où cte désigne une constante

$$T2 = T/2 - T1 - \tau_2$$

Pour un temps T'1 de retard à la commande et de temps stockage donné pour un matériel utilisé déterminé, une étude expérimentale a montré que le paramètre $\tau_2$ de retard à la conduction des interrupteurs, et donc de la valeur du courant IRLC par rapport à la tension d'alimentation + E/2 - E/2 délivrée par l'onduleur, vérifie une loi sensiblement linéaire du temps de conduction T2, ce temps de conduction supplémentaire étant introduit comme un retard par les moyens 40 de retard du signal de commande, pour obtenir la valeur de retard $\tau_2$ considérée.

Ainsi, les moyens 40 de retard du signal de commande de régulation ont pour effet de retarder le signal logique U avant T2 délivré par le comparateur 51, d'une durée T2 proportionnelle sensiblement à l'intégrale de $\tau_2$ par rapport à la valeur de consigne $\tau_{2c}$ à chaque demi-période de la tension d'alimentation + E/2, -E/2 par l'intermédiaire du signal de commande UC.

Sur la figure 5e, on a également représenté le signal logique U avant T2, puis le signal logique U après T2, celui-ci étant obtenu par décalage ou retard de valeur T2, par l'intermédiaire du circuit de retard 403 de la figure 5c. En fonctionnement, les moyens numériques 400 de comptage du nombre d'impulsions base de temps de référence effectuent tout d'abord le comptage de ces impulsions pendant la durée $\tau_2$ et les moyens de comptage numériques 400 permettent d'obtenir une valeur numérique de $\epsilon\tau_2$ erreur entre la valeur de $\tau_2$ mesurée et la valeur de consigne $\tau_{2c}$. A titre d'exemple non limitatif, les moyens numériques de comptage 400 peuvent être initialisés à la valeur de départ - $\tau_{2c}$. La phase de comptage est représentée par le repère 1 cerclé sur la figure 5e. Suite à cette phase de comptage, les moyens décompteurs 402 sont chargés à la valeur précédente de l'intégrale de $\Sigma\epsilon\tau_2$, cette intégrale ayant été stockée dans le registre ou mémoire tampon 4011. Cette étape de chargement du moyen décompteur 402 est notée par le repère 2 cerclé sur la figure 5e.

Le décomptage de la valeur de $\Sigma\epsilon_{T2}$ est alors effectué à partir des moyens des compteurs 402 initialisés à la valeur de l'intégrale $\Sigma\epsilon_{T2}$ complémentée par l'intermédiaire de l'inverseur 405, le passage à zéro du bit le plus significatif QMSb étant détecté. Cette étape est représentée en 3 cerclé sur la figure 5e. La sommation de la dernière valeur de $\epsilon_{T2}$ qui est dans les moyens numériques de comptage 400 avec la valeur précédente de $\Sigma\epsilon_{T2}$ est alors effectuée par l'additionneur numérique 4010, cette opération étant repérée par le repère 4 cerclé sur la figure 5e. Une réinitialisation des moyens de comptage 400 à la valeur - de consigne est alors effectuée, cette opération étant référencée par le repère 5 cerclé sur la figure 5e.

Afin d'assurer une mesure précise de $\tau_2$, soit un temps d'environ 500 nanosecondes, il faut au moins dix cycles d'analyse, soit une fréquence de 20 MHz. Afin de permettre un réglage simple du gain, la fréquence des impulsions base de temps est égale avantageusement à 40 MHz, ainsi que cité précédemment. Une telle fréquence d'horloge implique l'utilisation d'une technologie de type TTLS par exemple. Le décompte du retard T2 à partir de la valeur de l'intégrale de $\Sigma\epsilon_{T2}$ est ainsi effectué par les moyens décompteurs 402, lesquels peuvent avantageusement être constitués par un compteur 12 bits, susceptible d'effectuer un comptage à 40 MHz.

Le fonctionnement du système générateur de la régulation précédemment décrite peut être résumé de la manière ci-après. La tension d'alimentation du pont délivrée par l'onduleur d'amplitude E est tout d'abord mise à zéro. L'interrupteur K1 de l'étage de sortie d'amplification 54 de la boucle de commande de démarrage en auto-oscillation est alors mis en position fermée et la tension d'alimentation, l'amplitude de celle-ci, est alors augmentée. Dès ce moment là, le générateur est en auto-oscillation, et le temps de conduction des diodes n'est pas encore régulé. Cette séquence de démarrage précédemment décrite est nécessaire dans le cas où des thyristors duals sont utilisés, ceux-ci interdisant un démarrage sous tension.

Lorsque le courant crête à la sortie du générateur, courant IRLC, atteint une valeur suffisante, cette valeur étant comparée à une valeur de seuil, ainsi qu'il a été décrit, pour engendrer le signal CLR de commande de présence ou d'absence de régulation, cette dernière est mise en marche par le signal CLR précédemment cité.

L'expérience montre que le système objet de l'invention présente bien les avantages prévus, le démarrage en deux temps permettant un démarrage sur toutes les charges, même d'impédance très élevée. Ceci est rendu possible, car le système de mise en auto-oscillation est très sensible, et il fonctionne avec des courants très faibles, c'est-à-dire très inférieurs à un ampère. De plus, le démarrage à tension nulle ou sensiblement nulle crée peu de contraintes sur les interrupteurs et rend les transitoires de démarrage dans les transformateurs d'adaptation pratiquement inexistants.

On notera également que l'existence d'une légère dissymétrie entre les temps de conduction des diodes des diagonales du pont, dissymétrie provenant des différences de caractéristiques entre les diodes utilisées, n'est pas gênante. En effet, la régulation agit sur la moyenne des temps de conduction et cette dissymétrie n'intervient donc pratiquement pas.

Selon une autre caractéristique avantageuse du système de régulation objet de l'invention, ainsi que représenté en figure 6, celui-ci comporte en outre une boucle de régulation de puissance en fonction du niveau de tension d'alimentation de l'onduleur. Sur la figure 6, on a représenté d'une part la boucle dite rapide de régulation en fréquence, telle que décrite précédemment, ainsi qu' une boucle dite lente, agissant au niveau des redresseurs alimentant l'onduleur. La boucle de régulation de puissance en foncton du niveau de tension d'alimentaion de l'onduleur ne sera pas décrite car elle correspond à la mise en oeuvre de techniques et de principes connus de commande du niveau de tension redressée. Cependant, cette deuxième boucle de régulation de puissance permet la mise en oeuvre d'un système de régulation conforme à la présente invention d'une très grande souplesse d'utilisation, la transmission de la puissance ou énergie à la charge étant effectuée par asservissement de la fréquence des champs magnétiques induits à une valeur très proche mais toujours supérieure à la fréquence propre de la charge, et par la régulation de la puissance par action sur la tension d'alimentation de l'onduleur et donc sur le pont redresseur commandé ou sur le hacheur. En outre, pour un même inducteur, différentes capacités sont susceptibles d'être utilisées afin d'obtenir différentes fréquences de fonctionnement. Enfin, la gestion d'un certain nombre de sécurités et de séquences d'arrêt et de mise en marche peut également être prévue.

**Revendications**

1. Système de régulation d'un générateur onduleur à commutateurs alimentant une charge par induction, la charge présentant l'impédance d'un circuit résonant série (R,L,C) et étant montée en série avec la sortie dudit onduleur par l'intermédiaire d'au moins deux interrupteurs (1,2) constitués par des commutateurs comportant chacun un élément de commutation (T1,T2) et dont les bornes de commutation sont connectées en parallèle avec une diode (D1,D2) respectivement, caractérisé en ce que ledit système comprend une boucle d'asservissement en fréquence de la tension d'alimentation délivrée par l'onduleur à une fréquence voisine de la fréquence propre de la charge, variable en fonction de l'état magnétique de la charge.

2. Système selon la revendication 1, caractérisé en ce que ladite boucle d'asservissement en fréquence consiste en une boucle de régulation du temps de conduction ($\tau$1) d'une diode (D1,D2) et/ou de l'intervalle de temps ($\tau$2) séparant l'instant de début de conduction de ladite diode et l'instant d'annulation du courant de charge (IRLC).

3. Système selon la revendication 2, caractérisé en ce que ladite boucle d'asservissement en fréquence comporte :

-des moyens (3) capteurs de mesure de l'intervalle de temps($\tau_2$) séparant l'instant de début de conduction de ladite diode et l'instant d'annulation du courant de charge (IRLC),

-des moyens (4) de correction de la fréquence de la tension (U) délivrée par l'onduleur en fonction de la valeur de l'intervalle de temps ($\tau_2$) par rapport à une valeur de référence.

4. Système selon la revendication 3, caractérisé en ce que lesdits moyens capteurs comprennent:

-des premiers moyens (30) de détection du courant transitant dans la diode (D1),

-des deuxièmes moyens (31) de détection du courant transitant dans la diode (D2),

-des moyens (32) de mise en forme des signaux délivrés par les premiers et deuxièmes moyens détecteurs permettant d'engendrer un signal périodique (A) de fréquence double de celle des courants transitant dans les diodes (D1) et (D2),

-des troisièmes moyens (33) de détection de l'intensité (IRLC) Transitant dans la charge et délivrant un signal représentatif de cette intensité,

-des moyens (34) de détection de passage à zéro dudit signal de détection délivrant une impulsion (B) lors du passage à zéro du signal de détection,

-un circuit logique (35) recevant d'une part le signal périodique de fréquence double de celle des courants transitant dans les diodes (D1) et (D2) et d'autre part les impulsions délivrées par les moyens de détection de passage à zéro et délivrant un signal périodique rectangulaire ($S\tau_2$) dont le rapport cyclique est représentatif de l'intervalle de temps ($\tau_2$).

5. Système selon la revendication 4, caractérisé en ce que les moyens (32) de mise en forme des signaux délivrés par les premiers et deuxièmes moyens détecteurs comportent :

-un amplificateur opérationnel (320) dont l'entrée négative reçoit les signaux délivrés par les premiers et deuxièmes moyens de détection (30,31) et dont l'entrée positive est connectée en réaction avec la sortie de cet amplificateur,

-une bascule (321) de type monostable assurant la mise en forme des signaux sommés délivrés par ledit amplificateur sommateur (320).

6. Système selon la revendication 4, caractérisé en ce que ledit circuit logique (35) comprend :

-une première bascule monostable (RS) (350) recevant sur deux entrées les impulsions (B) délivrées par les moyens de détection de passage à zéro du signal de détection,

-une deuxième bascule monostable (JK) (351) recevant d'une part le signal (A) délivré par le circuit logique,délivrant le signal périodique rectangulaire dont le rapport cyclique est représentatif de l'intervalle de temps ($\tau_2$) par l'intermédiaire d'un circuit monostable inverseur (352) de façon à délivrer ladite bascule monostable (JK) un signal complémenté ($\overline{A}$), et, d'autre part, les sorties complémentées ($\overline{R}$, $\overline{S}$) délivrées par la première bascule monostable (RS), ladite deuxième bascule (JK) délivrant deux signaux compémentés (Q, $\overline{Q}$),

-un premier monostable (353) permettant d'engendrer à partir des impulsions (B) des impulsions complémentées ($\overline{B}$),

-une première porte (NON-ET) (354) recevant sur une première entrée le signal (Q) et sur une deuxième entrée le signal ($\overline{B}$),

-une deuxième porte NON-ET (355) recevant sur une première entrée les impulsions (B) et sur une deuxième entrée le signal ($\overline{Q}$),

-une troisième porte NON-ET (356) recevant sur une première, respectivement deuxième entrée le signal de sortie délivré par la première respectivement deuxième porte NON-ET et délivrant ledit signal périodique (S$\tau$2) dont le rapport cyclique est représentatif de la durée ($\tau$2). .

7. Système selon la revendication 6, caractérisé en ce que le signal périodique (S$\tau$2) dont le rapport cyclique est représentatif de la durée ($\tau$2) est de la forme

$$S\tau_2 = B \; \overline{Q} + \overline{B} \; Q$$

8. Système selon l'une des revendications 1 à 7, caractérisé en ce qu'il comporte en outre une boucle de commande de démarrage en auto-oscillation à une fréquence (f) supérieure à la fréquence de résonance (fo) de la charge.

9. Système selon la revendication 8, caractérisé en ce que ladite boucle de commande de démarrage en auto-oscillation comprend :
-des moyens (50) détecteur du courant de charge (IRLC),
-un circuit à résistance capacité (R',C') permettant d'engendrer, en fonction du courant de charge (IRLC), une tension (UR') proportionnelle au courant de charge (IRLC) et une tension (UC'), déphasée de $\frac{\pi}{2}$ par rapport à ladite tension (UR) et par rapport au courant de charge (IRLC), la borne commune à la résistance (R') et à la capacité (C')étant connectée au potentiel de référence,
-un comparateur (51) constitué par un amplificateur opérationnel, dont la borne positive est connectée à la borne de la résistance (R') reliée aux moyens détecteurs et dont la borne négative est reliée à la capacité (C') reliée auxmoyens détecteurs,
-un circuit de commande (52) recevant les signaux délivrés par le comparateur et délivrant un signal de commande de régulation.

10. Système selon la revendication 9, caractérisé en ce que ladite boucle de commande comprend en outre :
-un oscillateur (53) commandé, recevant du circuit de commande (52) un signal de commande inhibition d'amorçage, ledit oscillateur étant adapté à engendrer un signal sensiblement rectangulaire de fréquence (f) très supérieure à la fréquence de résonance (fo) de la charge en l'absence de signal de commande d'inhibition d'amorçage et un signal de fréquence identique à celle du signal de commande d'inhibition en présence de celui-ci.

11. Système selon la revendication 10, caractérisé en ce que ledit oscillateur commandé (53) comprend:
-un amplificateur opérationnel (530) dont l'entrée positive est connectée en réaction avec l'entrée négative, laquelle est en outre connectée à la tension de référence par l'intermédiaire d'une capacité (C18) ,l'entrée de commande recevant le signal de commande d'inhibition d'amorçage étant effectuée sur la borne positive dudit amplificateur opérationnel par l'intermédiaire d'une capacité de liaison (C19).

12. Système selon l'une des revendications 2 à 11, caractérisé en ce que les moyens (4) de correction de la fréquence de la tension (UC)comportent en outre :
des moyens (40) de retard du signal de commande de régulation d'une durée proportionnelle à l'intégrale de la valeur de la durée (S$\tau$2) à chaque demi-période du signal de commande par rapport à une valeur de durée de consigne (S$\tau$2c).

13. Système selon la revendication 12, caractérisé en ce que lesdits moyens (40) comportent :
-une horloge rapide (CLK) délivrant des impulsions base de temps de référence,
-des moyens numériques (400) de comptage du nombre d'impulsions base de temps de référence entre les instants correspondant à la valeur de la durée (S$\tau$2) de la demi-période considérée du signal de commande et la valeur d'une durée de consigne (S$\tau$2c) de référence, lesdits moyens numériques permettant par comptage d'engendrer un signal numérique représentatif de l'erreur ( $\epsilon\tau$2)entre la durée (S$\tau$2) et la valeur de durée de consigne (S$\tau$2c),
-des moyens intégrateurs numériques (401) permettant à partir du signal numérique représentatif de l'erreur ($\epsilon\tau$2) entre la durée (S$\tau$2) et la valeur de durée de consigne (S$\tau$2c) d'engendrer un signal numérique représentatif de l'intégrale ($\Sigma\epsilon\tau$2),
-des moyens décompteurs (402) permettant à partir du signal numérique représentatif de l'intégrale ($\Sigma\epsilon\tau$2) complémenté notamment, à partir de la valeur complémentée du bit de comptage le plus significatif, sur transition négative de celui-ci, d'engendrer un signal de commande de retard,
-un circuit de retard (403) recevant en entrée de retard ledit signal de commande de régulation et en entrée de commande, ledit signal de commande de retard, et délivrant le signal de commande retardé.

14. Système selon la revendication 13, caractérisé en ce que lesdits moyens intégrateurs numériques comprennent :
-un additionneur numérique (4010) à deux entrées, une première entrée recevant le signal numérique

($\epsilon_{\tau_2}$) représentatif de l'erreur entre la durée ($S_{\tau_2}$) et la valeur de la durée de consigne ($S_{\tau_{2c}}$),ledit additionneur délivrant un signal numérique représentatif de l'intégrale($\Sigma\epsilon_{\tau_2}$),

-un circuit mémoire tampon (4011) recevant en écriture le signal représentatif de l'intégrale ($\Sigma\epsilon_{\tau_2}$) et délivrant en lecture ce même signal, la sortie lecture étant en outre connectée en réaction sur la deuxième entrée du circuit additionneur.

15. Système de régulation selon l'une des revendications 1 à 14, caractérisé en ce qu'il comporte en outre une boucle de régulation de puissance en fonction du niveau de tension d'alimentation de l'onduleur.

FIG_1c

Uab
Uc
commande

$I_{RLC}$
$t_1$ $t_2$ $t_3$ $t_5$ $t_7$ $t_9$ t
$t_0$ $t_4$ $t_6$ $t_8$

$U_{t1}$ t

transistors 1

$I_{C1}$ t

$I_{D1}$ t

commutateur 1

$U_{t2}$ t

transistors 2

$I_{C2}$ t

$I_{D2}$ t

commutateur 2

FIG_1b

E/2
$C_4$
1
a
R
C
L
$I_{RLC}$
$D_1$
E $C_3$
b $C_1$
E/2
$C_5$
t2
$D_2$
2
$C_2$

commande

+5V
signal de commande
Uc

contrôle
t1
D1
C1

FIG_1a

$I_{RLC}$
$U_{t2}$
$T_1$
$T_2$
Uc

FIG_1d

$I_{D2}$ théorique

$I_{D2}$

FIG_2a

$\tau_1$: temps de conduction de la diode

FIG_2b

$\tau_2$: début de condution de la diode
passage à 0 du courant

0 274 303

FIG_3a

FIG_3b

FIG_3c

FIG_4a

FIG_4b

FIG_4c

FIG_4d

FIG_4e

FIG_5a

FIG_5b

FIG_5c

U avant T2

407

U après T2 commande

Sᵧ

## FIG_5d

520

U avant T2

521

523

CLR

U après T2 commande

U après T2

522

52

$I_{RLC}$

T2

Z2

$+\dfrac{E}{2}$

T1 + T2

Régulation

Régulation

$-\dfrac{E}{2}$

Régulation

U avant T2

U après T2

Chargement du compteur

Sommation

Sᵧ

② ④

⑤ Réinitiation du compteur

① ③

Comptage   Décomptage

## FIG_5e

380V ∿

Redresseur

P,I,U,θ

Onduleur+Charge

$T_{fonctionnement} - T_o$

## FIG_6

Boucle «rapide»

Régulation

Régulation

Boucle «lente»

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | ELECTRONIQUE INDUSTRIELLE, no. 29, 1er mars 1982, pages 23,24, Paris, FR; J.M. THOUVENIN: "Onduleurs à thyristors pour le chauffage par induction" * Page 23, colonne de gauche, paragraphe 5; figure 1 * | 1 | H 02 M   7/538 H 05 B   6/06 |
| A | IEEE TRANSACTIONS ON AEROSPACE AND ELECTRONIC SYSTEMS, vol. AES-19, no. 6, novembre 1983, pages 820-830, IEEE, New York, US; R.J. KING et al.: "Inherent overload protection for the series resonant converter" * Page 820, lignes 28-32; figure 1 * | 1,2 | |
| A | REVUE DE PHYSIQUE APPLIQUEE, vol. 16, no. 6, juin 1981, pages 333-342, Orsay, FR; Y. CHERON et al.: "Etude d'une nouvelle utilisation des transistors de puissance dans les convertisseurs haute tension à fréquence élevée" | | |

DOMAINES TECHNIQUES
RECHERCHES (Int. Cl.4)

H 02 M
H 05 B
H 03 K

Le présent rapport a été établi pour toutes les revendications

| Lieu de la recherche | Date d'achèvement de la recherche | Examinateur |
|---|---|---|
| LA HAYE | 26-02-1988 | MOUEZA, A.J.L. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant